# EUROPÄISCHE PATENTSCHRIFT

(11) **EP 3 136 556 B1**
(45) Veröffentlichungstag und Bekanntmachung des Hinweises auf die Patenterteilung: **09.10.2019**
(21) Anmeldenummer: 16001848.7
(22) Anmeldetag: 23.08.2016
(51) Int. Cl.: H02K 7/116

(54) **ANTRIEBSEINHEIT UND KOMBINATION EINER ANTRIEBSEINHEIT MIT EINER ANZUTREIBENDEN EINHEIT**
DRIVE UNIT AND COMBINATION OF A DRIVE UNIT WITH A UNIT TO BE DRIVEN
UNITE D'ENTRAINEMENT ET COMBINAISON D'UNE UNITE D'ENTRAINEMENT COMPRENANT UNE UNITE A ENTRAINER

(30) Priorität: 25.08.2015 DE 102015010878; 23.02.2016 DE 102016002055
(43) Veröffentlichungstag der Anmeldung: 01.03.2017
(73) Patentinhaber: Ehrt Maschinenbau GmbH, 53619 Rheinbreitbach (DE)
(72) Erfinder: Winters, Andreas, 42653 Solingen (DE)
(74) Vertreter: Sattler de Sousa e Brito, Clara

(56) Entgegenhaltungen:
- EP-A1- 1 719 656
- WO-A1-2008/131358
- DE-A1-102009 016 854

## Beschreibung

Die Erfindung betrifft eine Antriebseinheit mit einem Elektromotor und einem mit einer Abtriebswelle des Elektromotors drehantreibend verbundenen Übersetzungsgetriebe. Die Erfindung betrifft weiterhin eine Kombination einer solchen Antriebseinheit mit einer anzutreibenden Einheit.

Übliche Anordnungen derartiger Antriebseinheiten sehen vor, dass das Übersetzungsgetriebe stirnseitig des Elektromotors mit einem aus einem Gehäuse des Elektromotors ragenden Abschnitt der Abtriebswelle des Elektromotors verbunden ist. Dadurch ergibt sich eine relativ große Baugröße für die Antriebseinheit, insbesondere in Richtung entlang der Rotationsachse des Elektromotors (Baulänge), die für viele Anwendungen nachteilig ist.

Die WO 2008/13158 A1 offenbart einen Radnabenmotor, der ein Planetengetriebe aufweist, das radial innerhalb des Rotors untergebracht ist.

Ausgehend von diesem Stand der Technik lag der Erfindung die Aufgabe zugrunde, eine Antriebseinheit mit einem Elektromotor und einem Übersetzungsgetriebe anzugeben, die sich durch eine möglichst kompakte Baugröße und insbesondere Baulänge auszeichnet.

Diese Aufgabe wird durch eine Antriebseinheit gemäß dem Patentanspruch 1 gelöst. Vorteilhafte Ausgestaltungen der erfindungsgemäßen Antriebseinheit sowie der erfindungsgemäßen Kombination aus Antriebseinheit und anzutreibender Einheit sind Gegenstände der weiteren Patentansprüche und ergeben sich aus der nachfolgenden Beschreibung der Erfindung.

Bei einer Antriebseinheit mit einem Elektromotor und mit einem mit einer Abtriebswelle des Elektromotors drehantreibend verbundenen Übersetzungsgetriebe, bei der der Elektromotor einen Stator und einen die Abtriebswelle umfassenden Rotor aufweist, ist erfindungsgemäß vorgesehen, dass das Übersetzungsgetriebe (zumindest teilweise) innerhalb der (in zumindest einem Abschnitt) als Hohlwelle ausgebildeten Abtriebswelle angeordnet ist. Dabei kann der Rotor sowohl (zumindest teilweise) innerhalb (sogenannter Innenläufer) als auch außerhalb (sogenannter Außenläufer) des Stators angeordneten sein. Durch die zumindest teilweise Anordnung des Übersetzungsgetriebes innerhalb des Elektromotors, was durch die Ausgestaltung der Abtriebswelle als Hohlwelle ermöglicht wird, kann eine kompakte Baugröße und insbesondere Baulänge für die erfindungsgemäße Antriebseinheit realisiert werden.

Eine erfindungsgemäße Kombination umfasst neben einer solchen Antriebseinheit zumindest noch eine anzutreibende Einheit, die einen statischen Teil und einen drehbaren Teil umfasst, wobei der drehbare Teil für eine drehantreibende Verbindung mit einer Ausgangskomponente, insbesondere einer Ausgangswelle, des Übersetzungsgetriebes vorgesehen ist.

Vorzugsweise kann vorgesehen sein, dass das Übersetzungsgetriebe in Form einer Getriebeeinheit ausgebildet ist, das neben den die Übersetzung gewährleistenden Getriebekomponenten (z.B. Zahnrädern) zumindest noch ein einzelne oder alle der Getriebekomponenten umgebendes Getriebegehäuse (das selbst eine der Getriebekomponenten darstellen kann) umfasst. Besonders bevorzugt kann dabei noch vorgesehen sein, dass die Getriebeeinheit gekapselt ausgeführt ist, sodass diese alle Getriebekomponenten vollständig umgibt und möglichst lediglich (vorzugsweise abdichtbare) Durchtrittsöffnungen für eine Eingangsquelle und eine Ausgangswelle oder für zur drehfesten Verbindung mit der Eingangsquelle und der Ausgangswelle vorgesehene Komponenten (insbesondere die Abtriebswelle des Elektromotors und eine Antriebswelle des drehbaren Teils der anzutreibenden Einheit) umfasst. Gegebenenfalls können noch weitere, vorzugsweise verschließbare Wartungsöffnungen, beispielsweise zur Schmierung der Getriebekomponenten mit einem Schmiermittel, vorgesehen sein.

In einer bevorzugten Ausgestaltung der erfindungsgemäßen Antriebseinheit und damit auch der erfindungsgemäßen Kombination kann vorgesehen sein, dass der Elektromotor als Servomotor ausgebildet ist. Der Elektromotor ist demnach derart ausgebildet, dass dieser durch die Integration mindestens eines Sensors und die Auswertbarkeit der Messwerte dieses Sensors in einer Auswerteeinheit eine Kontrolle von zumindest der Winkelposition der Abtriebswelle und, daraus abgeleitet, vorzugsweise auch der Drehgeschwindigkeit und/oder der Drehbeschleunigung ermöglicht. Dabei kann weiterhin bevorzugt eine Regelung für die Winkelposition und/oder einen oder mehrere sich aus der Winkelposition ableitende Parameter vorgesehen sein.

Weiterhin bevorzugt kann vorgesehen sein, dass das Übersetzungsgetriebe als Planetengetriebe ausgebildet ist oder zumindest ein Planetengetriebe umfasst. Planetengetriebe können insbesondere den Vorteil einer kompakten Bauform bei gleichzeitig großen Übersetzungsverhältnissen aufweisen.

Eine erfindungsgemäße Kombination aus anzutreibender Einheit und einer solchen Antriebseinheit mit Planetengetriebe kann vorteilhafterweise dadurch weitergebildet sein, dass zumindest eine Getriebekomponente des Planetengetriebes mit dem statischen Teil der anzutreibenden Einheit drehfest verbunden ist. Dadurch kann vermieden werden, dass sich das Planetengetriebe insgesamt mit der Abtriebswelle des Elektromotors mitdreht.

In einer bevorzugten Ausgestaltung der erfindungsgemäßen Antriebseinheit kann zudem ein den Elektromotor und das Übersetzungsgetriebe (zumindest teilweise) aufnehmendes Antriebsgehäuse vorgesehen sein. Dieses kann insbesondere zur drehfesten Befestigung des Stators des Elektromotors und/oder zur Befestigung der gesamten Antriebseinheit an einer Befestigungsstruktur, beispielsweise dem statischen Teil der anzutreibenden Einheit vorgesehen sein. In einer bevorzugten Ausgestaltung der erfindungsgemäßen Kombination kann demnach vorgesehen sein, dass das Antriebsgehäuse der Antriebseinheit mit dem statischen Teil der anzutreibenden Einheit drehfest verbunden ist. Zusätzlich oder alternativ kann auch vorgesehen sein, dass der Stator des Elektromotors mit dem statischen Teil der anzutreibenden Einheit drehfest verbunden ist.

Bei einer solchen Antriebseinheit kann weiterhin bevorzugt vorgesehen sein, dass sich die Abtriebswelle an zumindest einem längsaxialen Ende mit einem Lagerungsabschnitt über den Stator hinaus erstreckt und in diesem Lagerungsabschnitt drehbar innerhalb des Antriebsgehäuses gelagert ist, wodurch sich eine konstruktiv vorteilhafte Lagerung für den Rotor des Elektromotors ergeben kann.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in der Zeichnung dargestellten Ausführungsbeispiels näher erläutert. In der Zeichnung zeigt:

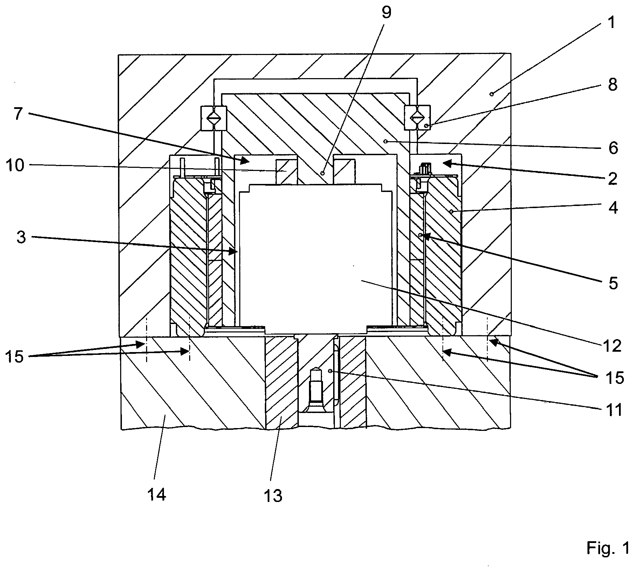

- Fig. 1:: in vereinfachter Darstellung eine erfindungsgemäße Kombination einer erfindungsgemäßen Antriebseinheit und einer anzutreibenden Einheit.

Die Antriebseinheit der in der Fig. 1 dargestellten erfindungsgemäßen Kombination umfasst ein Antriebsgehäuse 1, das eine zu einer Stirnseite hin offene Aufnahmevertiefung 2 ausbildet, die zur weitgehend vollständigen Aufnahme von sowohl einem Elektromotor als auch einer Getriebeeinheit 3 der Antriebseinheit vorgesehen ist.

Der Elektromotor ist als Servomotor ausgebildet und umfasst einen Stator 4, der drehfest, beispielsweise über eine oder mehrere Verschraubungen oder Gewindeverbindungen mit dem Antriebsgehäuse 1 verbunden sein kann, sowie einen innerhalb des Stators 4 drehbar angeordneten Rotor 5, der eine Abtriebswelle 6 umfasst, die in einem Abschnitt als Hohlwelle ausgebildet ist. Das Innenvolumen 7 dieses Abschnitts der Abtriebswelle 6 erstreckt sich dabei bis zu demjenigen stirnseitigen Ende der Abtriebswelle 6, an dem auch das Antriebsgehäuse 1 offen ausgebildet ist. An dem anderen Ende der Abtriebswelle 6 ragt diese mit einem Lagerungsabschnitt über den Stator 4 des Elektromotors hinaus und bis in einen ersten Abschnitt der Aufnahmevertiefung 2 des Antriebsgehäuses 1, das einen im Vergleich zu einem zweiten Abschnitt, innerhalb dessen unter anderem der Stator 4 des Elektromotors angeordnet ist, kleineren Durchmesser aufweist. In diesem ersten Abschnitt der Aufnahmevertiefung 2 ist der entsprechende Lagerungsabschnitt der Abtriebswelle 6 über ein Drehlager 8 drehbar gelagert.

Ein zentral von dem Grund des Innenvolumens 7 der Abtriebswelle hervor ragender Abtriebszapfen 9 dient einer drehfesten Verbindung mit einer Eingangswelle 10 der Getriebeeinheit 3, die mit Ausnahme eines Abschnitts einer Ausgangswelle 11 der Getriebeeinheit 3 vollständig innerhalb der Abtriebswelle 6 des Elektromotors angeordnet ist. Die Getriebeeinheit 3 ist im vorliegenden Ausführungsbeispiel als Planetengetriebeeinheit ausgebildet.

Die Getriebeeinheit 3 umfasst ein Getriebegehäuse 12, innerhalb dessen in gekapselter Ausführung Getriebekomponenten (teilweise nicht gezeigt) eines einfachen oder mehrfachen Planetengetriebes und somit unter anderem ein oder mehrere Umlaufräder sowie ein oder mehrere umkreiste Räder angeordnet sind. Dabei kann eine Ausgestaltung des Planetengetriebes mit einer oder mehreren Kombinationen aus Sonnenrad, Planetenrad oder -rädern und Hohlrad hinsichtlich einer angestrebten kompakten Baugröße und insbesondere Baulänge vorteilhaft sein. Die Räder des Planetengetriebes können insbesondere formschlüssig zusammenwirken und insbesondere als Zahnräder ausgebildet sein. Das Getriebegehäuse 12 kann dabei selbst eine Getriebekomponente darstellen und beispielsweise als Hohlrad für das Planetengetriebe dienen.

Der aus der Abtriebswelle 6 des Elektromotors und auch aus dem Antriebsgehäuse 1 heraus ragende Abschnitt der Ausgangswelle 11 der Getriebeeinheit 3 dient einer drehfesten Verbindung mit einem drehbaren Teil 13 der stark vereinfacht dargestellten anzutreibenden Einheit, die neben diesem drehbaren Teil 13 noch einen statischen Teil 14 aufweist. Bei der anzutreibenden Einheit kann es sich beispielsweise um eine Werkzeugeinheit handeln, bei dem das anzutreibende Werkzeug den anzutreibenden Teil darstellt oder mit diesem drehantreibend verbunden ist. Der statische Teil 14 bei einer solchen Werkzeugeinheit kann insbesondere von einem Werkzeuggehäuse ausgebildet sein, das primär einer zumindest drehbaren Lagerung des Werkzeugs dienen kann.

Zur Abstützung des von dem Elektromotor erzeugten Drehmoments und zur Gewährleistung der gewünschten Übersetzung durch die Getriebeeinheit 3 kann vorgesehen sein, dass sowohl das Antriebsgehäuse 1 als auch das Getriebegehäuse 12 drehfest mit dem statischen Teil 14 der anzutreibenden Einheit verbunden sind. Hierzu können beispielsweise Verschraubungen 15 dienen.

### Bezuqszeichenliste

- 1: Antriebsgehäuse
- 2: Aufnahmevertiefung
- 3: Getriebeeinheit
- 4: Stator
- 5: Rotor
- 6: Abtriebswelle
- 7: Innenvolumen der Abtriebswelle
- 8: Drehlager
- 9: Abtriebszapfen
- 10: Eingangswelle der Getriebeeinheit
- 11: Ausgangswelle der Getriebeeinheit
- 12: Getriebegehäuse
- 13: drehbarer Teil der anzutreibenden Einheit
- 14: statischer Teil der anzutreibenden Einheit
- 15: Verschraubung

## Patentansprüche

1. Kombination
- einer Antriebseinheit mit
- einem Elektromotor, der
- einen Stator (4) und
- einen die Abtriebswelle (6) umfassenden Rotor (5) aufweist und
- einem Übersetzungsgetriebe,
- das mit einer Abtriebswelle (6) des Elektromotors drehantreibend verbundenen ist,
- das ein Planetengetriebe umfasst und
- das innerhalb der als Hohlwelle ausgebildeten Abtriebswelle (6) des Elektromotors angeordnet ist,
**dadurch gekennzeichnet, dass**
die Kombination eine Werkzeugeinheit umfasst, die einen statischen Teil (14) und einen drehbaren Teil (13) umfasst, wobei der drehbare Teil (13) ein Werkzeug ist oder mit einem solchen Werkzeug drehantreibend verbunden ist und der statische Teil (14) ein Werkzeuggehäuse ist, das einer drehbaren Lagerung des Werkzeugs dient, wobei ein Hohlrad (12) des Planetengetriebes der Antriebseinheit mit dem Werkzeuggehäuse der Werkzeugeinheit drehfest verbunden ist.

2. Kombination gemäß Anspruch 1, **dadurch gekennzeichnet, dass** der Elektromotor als Servomotor ausgebildet ist.

3. Kombination gemäß einem der vorhergehenden Ansprüche, **gekennzeichnet durch** ein den Elektromotor und das Übersetzungsgetriebe aufnehmendes Antriebsgehäuse (1).

4. Kombination gemäß Anspruch 3, **dadurch gekennzeichnet, dass** sich die Abtriebswelle (6) an zumindest einem längsaxialen Ende mit einem Lagerungsabschnitt über den Stator (4) hinaus erstreckt und in diesem Lagerungsabschnitt drehbar innerhalb des Antriebsgehäuses (1) gelagert ist.

5. Kombination gemäß einem der vorhergehenden Ansprüche, **dadurch gekennzeichnet, dass** der Stator (4) des Elektromotors mit dem Werkzeuggehäuse (14) der Werkzeugeinheit drehfest verbunden ist.

6. Kombination gemäß einem der vorhergehenden Ansprüche mit einer Antriebseinheit gemäß Anspruch 3 oder 4, **dadurch gekennzeichnet, dass** das Antriebsgehäuse (1) mit dem Werkzeuggehäuse der Werkzeugeinheit drehfest verbunden ist.

## Claims

1. Combination
- of a drive unit having
- an electric motor which has
- a stator (4) and
- a rotor (5) comprising the output shaft (6), and
- a transmission gear mechanism,
- which is connected to an output shaft (6) of the electric motor in a rotationally driving manner,
- which comprises a planetary gear mechanism, and
- which is arranged within the output shaft (6), which is designed as a hollow shaft, of the electric motor,
**characterized in that**
the combination comprises a tool unit which comprises a static part (14) and a rotatable part (13), wherein the rotatable part (13) is a tool or is connected to such a tool in a rotationally driving manner, and the static part (14) is a tool housing which serves for rotatably mounting the tool, wherein a ring gear (12) of the planetary gear mechanism of the drive unit is connected to the tool housing of the tool unit in a rotationally fixed manner.

2. Combination according to Claim 1, **characterized in that** the electric motor is designed as a servomotor.

3. Combination according to either of the preceding claims, **characterized by** a drive housing (1) which receives the electric motor and the transmission gear mechanism.

4. Combination according to Claim 3, **characterized in that** the output shaft (6) extends at at least one longitudinally axial end beyond the stator (4) by way of a bearing portion and is rotatably mounted within the drive housing (1) in this bearing portion.

5. Combination according to one of the preceding claims, **characterized in that** the stator (4) of the electric motor is connected to the tool housing (14) of the tool unit in a rotationally fixed manner.

6. Combination according to one of the preceding claims having a drive unit according to Claim 3 or 4, **characterized in that** the drive housing (1) is connected to the tool housing of the tool unit in a rotationally fixed manner.

## Revendications

1. Combinaison
- d'une unité d'entraînement avec
- un moteur électrique, qui présente
- un stator (4) et
- un rotor (5) comportant l'arbre de sortie (6),
et
- un engrenage de transmission,
- qui est relié en entraînement de rotation à un arbre de sortie (6) du moteur électrique,
- qui comprend un engrenage planétaire, et
- qui est disposé à l'intérieur d'un arbre de sortie (6) du moteur électrique formé par un arbre creux,
**caractérisée en ce que** la combinaison comprend une unité d'outil, qui comprend une partie statique (14) et une partie rotative (13), dans laquelle la partie rotative (13) est un outil ou est reliée en entraînement de rotation à un tel outil et la partie statique (14) est un boîtier d'outil, qui sert de support rotatif de l'outil, dans laquelle une couronne dentée (12) de l'engrenage planétaire de l'unité d'entraînement est reliée de façon calée en rotation au boîtier d'outil de l'unité d'outil.

2. Combinaison selon la revendication 1, **caractérisée en ce que** le moteur électrique est constitué par un servomoteur.

3. Combinaison selon l'une quelconque des revendications précédentes, **caractérisée par** un boîtier d'entraînement (1) contenant le moteur électrique et l'engrenage de transmission.

4. Combinaison selon la revendication 3, **caractérisée en ce que** l'arbre de sortie (6) s'étend au-delà du stator (4) avec une partie d'appui à au moins une extrémité axiale longitudinale et est supportée dans cette partie d'appui de façon rotative à l'intérieur du boîtier d'entraînement (1).

5. Combinaison selon l'une quelconque des revendications précédentes, **caractérisée en ce que** le stator (4) du moteur électrique est relié de façon calée en rotation au boîtier d'outil (14) de l'unité d'outil.

6. Combinaison selon l'une quelconque des revendications précédentes avec une unité d'entraînement selon une revendication 3 ou 4, **caractérisée en ce que** le boîtier d'entraînement (1) est relié de façon calée en rotation au boîtier d'outil de l'unité d'outil.
